# EUROPÄISCHE PATENTSCHRIFT

(11) **EP 0 517 303 B1**
(45) Veröffentlichungstag und Bekanntmachung des Hinweises auf die Patenterteilung: **14.08.1996**
(21) Anmeldenummer: 92201517.7
(22) Anmeldetag: 29.05.1992
(51) Int. Cl.: A61B 6/00, H04N 5/32, H04N 3/15, H01L 27/14

(54) **Anordnung mit einer Sensormatrix und einer Rücksetzanordnung**
Arrangement with a sensor matrix and a reset device
Arrangement avec une matrice de détecteurs et un dispositif de remise en zéro

(30) Priorität: 03.06.1991 DE 4118154
(43) Veröffentlichungstag der Anmeldung: 09.12.1992
(73) Patentinhaber: Philips Patentverwaltung GmbH, 22335 Hamburg (DE); Philips Electronics N.V., 5621 BA Eindhoven (NL)
(72) Erfinder: Conrads,Norbert,c/o Philips Patentverwaltung GmbH, W-2000 Hamburg 1 (DE); Schiebel,Ulrich,Dr.,c/o Philips Patentverwalt.GmbH, W-2000 Hamburg 1 (DE); Wieczorek,Herfried,Dr.,c/o Philips Patentverw.GmbH, W-2000 Hamburg 1 (DE)
(74) Vertreter: von Laue, Hanns-Ulrich, Dipl.-Ing.

(56) Entgegenhaltungen:
- EP-A- 0 028 960
- DE-A- 3 531 448
- DE-A- 4 002 431

## Beschreibung

Die Erfindung betrifft eine Anordnung mit in einer Matrix in Zeilen und Spalten angeordneten licht- oder röntgenstrahlenempfindlichen Sensoren, die in Abhängigkeit der auftreffenden Strahlungsmenge Ladungen erzeugen und die jeweils einen elektrischen Schalter aufweisen, mit je einer Sensoren-Zeile einer Schaltleitung, über die die Schalter aktivierbar sind, so daß die Ladungen der Sensoren der jeweils aktivierten Sensorzeile gleichzeitig über zugeordnete Ausleseleitungen abfließen.

Eine derartige Anordnung ist aus der europäischen Patentschrift EP-A-0 028 960 sowie der älteren deutschen Patentanmeldung DE-A-40 02 431 bekannt. Bei diesen bekannten Anordnungen ist es vorgesehen, die nach einer Bestrahlung mit Licht oder Röntgenstrahlen in den Sensoren der Matrix gespeicherten Ladungen zeilenweise nacheinander auszulesen. Dies geschieht in der Weise, daß zur Zeit jeweils nur eine Sensorzeile über die dieser Zeile zugeordnete Ausleseleitung aktiviert wird. Es fließt dann die Ladung jedes Sensors dieser Zeile über eine ihm zugeordnete Ausleseleitung ab und wird nachfolgend weiterverarbeitet. Auf diese Weise werden die Ladungen der Sensor-Zeilen nacheinander ausgelesen.

In der medizinischen Röntgendiagnostik besteht nun der Wunsch, derartige Anwendungen nicht für die Aufnahme von Einzelbildern, sondern auch für die Aufnahme schneller Bildfolgen mit bis zu 60 Bildern pro Sekunde einzusetzen. Die Bildfolgen können dabei unter kontinuierlicher Belichtung oder unter gepulster Belichtung mittels der Sensormatrix aufgenommen werden. Es ist dabei wünschenswert, daß die Sensormatrix für die Bildaufnahme jedes einzelnen Bildes einer solchen Bildfolge in ihren Ausgangszustand versetzt wird, d.h. daß die Sensormatrix keine Erinnerung an die zuletzt gemachte Aufnahme haben darf. Genau dieses Problem tritt jedoch bei schnellen Bildfolgen auf, da die Ladungen der Sensoren bei dem (schnell ablaufenden) Auslesevorgang nicht vollständig abfließen. Die einzelnen Sensorelemente beinhalten also je nach Belichtungsintensität der zuvor gemachten Aufnahme mehr oder weniger hohe Restladungen. Diese Ladungen addieren sich zu denjenigen, die in einem nachfolgenden Bild in dem Sensor erzeugt werden. Dies ist zeitlich gesehen nichts anderes als ein Übersprechen aufeinanderfolgender Bilder.

Es ist Aufgabe der Erfindung, die eingangs genannte Anordnung so weiterzuentwickeln, daß dieses Problem vermieden wird.

Diese Aufgabe ist erfindungsgemäß dadurch gelöst, daß zur Ableitung der Restladungen zuvor ausgelesener Sensor-Zeilen eine Rücksetzanordnung vorgesehen ist, welche wenigstens eine der ausgelesenen Sensor-Zeilen aktiviert, welche nach einer vorgebbaren Anzahl von Takten eines Rücksetz-Taktsignals jeweils wenigstens eine weitere der ausgelesenen Sensor-Zeilen aktiviert und welche jede aktivierte Sensor-Zeile nach einer vorgebbaren Anzahl von Takten nach deren Aktivierung wieder deaktiviert.

Mittels dieser Rücksetzanordnung gelingt es, das oben beschriebene Problem weitestgehend auszuschalten. Die Rücksetzanordnung ist dazu so ausgelegt, daß sie nach einem Auslesevorgang einzelner oder aller Sensor-Zeilen eine Ableitung der Restladungen dieser zuvor ausgelesenen Sensor-Zeilen vornimmt. Dazu wird zunächst wenigstens eine dieser ausgelesenen Sensor-Zeilen über deren Ausleseleitung aktiviert. Dies führt dazu, daß die elektrischen Schalter der Sensoren dieser Sensoren-Zeile leitend werden und die in den Sensoren nach dem zuvor erfolgten Auslesevorgang anschließend noch gespeicherten Restladungen über die zugeordneten Ausleseleitungen abfließen. Anschließend aktiviert die Rücksetzanordnung wenigstens eine weitere der zuvor ausgelesenen Sensor-Zeilen über deren Ausleseleitung(en). Dieser Vorgang setzt sich fort bis alle der zuvor ausgelesenen Sensor-Zeilen aktiviert wurden. Dabei wird jedoch jede Sensor-Zeile nach einer vorgebbaren Anzahl von Takten eines Rücksetz-Taktsignals nach deren Aktivierung wieder deaktiviert, d.h. jede Sensorzeile bleibt nur für die Dauer dieser Anzahl von Takten aktiviert.

Die zeitlich aufeinanderfolgende Aktivierung der Sensor-Zeilen wird vorgenommen, da eine gemeinsame Aktivierung aller Sensoren der Matrix zur Ableitung von deren Restladungen auf den Ausleseleitungen sehr hohe Ladungen bzw. Ströme auslösen würde, die von nachgeschalteten Schaltungsanordnungen, insbesondere Verstärkern, nicht verkraftet werden könnten, d.h. diese Schaltungselemente würden durch die hohen Ströme zerstört werden.

Bei der erfindungsgemäßen Anordnung wird jedoch immer nur eine bestimmte Anzahl von Sensorzeilen gleichzeitig neu aktiviert, so daß zu jedem Aktivierungszeitpunkt nur eine Teilmenge der Gesamtladungen der Sensoren der Matrix über die Ausleseleitungen abfließt. Wie viele Sensor-Zeilen gleichzeitig aktiviert werden, hängt von der Auslegung der Sensormatrix bzw. der nachgeschalteten Schaltungselemente ab und ist im einzelnen so zu wählen, daß nachfolgende Schaltungselemente nicht geschädigt werden.

Die Dauer der Anzahl von Takten des Rücksetz-Taktsignals, während derer jede einzelne Sensor-Zeile aktiviert ist, ist so ausgelegt, daß ein hinreichender Teil der in den Sensoren gespeicherten Restladungen abfließt. Sie kann beispielsweise so ausgelegt sein, daß etwa 99 % der Restladungen abfließen. Bei diesem Wert ist einerseits die oben beschriebene zeitliche Integration deutlich vermindert, andererseits benötigt die Rücksetzanordnung für die Aktivierung der verschiedenen Sensorzeilen eine noch relativ kurze Zeit, die ausreichend schnelle Bildfolgen gestattet.

Gemäß einer Ausgestaltung der Erfindung ist vorgesehen, daß die Rücksetzanordnung eine Schieberegisteranordnung aufweist, daß jede Schaltleitung der Matrix mit je einem Ausgang der Schieberegisteranordnung gekoppelt ist und daß der Schieberegisteranordnung eingangsseitig ein Impuls einer vorgebbaren Dauer zugeführt wird, welcher mit dem Takt des Rücksetz-Taktsignals die Schieberegisteranordnung durchläuft und zeitlich verschoben an deren Ausgängen erscheint.

Eine solche Schieberegisteranordnung gestattet es auf einfache Weise, die Sensorzeilen nacheinander für eine jeweils gleiche Zeitdauer zu aktivieren. Der der Schieberegisteranordnung eingangsseitig zugeführte Impuls weist diese Dauer auf und wird mit dem Takt des Rücksetz-Taktsignals durch die Schieberegisteranordnung geschoben. Somit taucht an den Ausgängen der Schieberegisteranordnung dieser Impuls jeweils um wenigstens einen Takt des Rücksetz-Taktsignals zeitlich verschoben auf, so daß die Sensorzeilen zeitlich nacheinander aktiviert werden.

Im einfachsten Fall ist dabei gemäß einer weiteren Ausgestaltung vorgesehen, daß allen Sensoren jeweils einer Spalte der Matrix eine gemeinsame Ausleseleitung zugeordnet ist und daß die Rücksetzanordnung die Ableitung der Restladungen für alle Sensor-Zeilen vornimmt.

Auf diese Weise kann die Rücksetzanordnung jede Sensor-Zeile einzeln aktivieren. Dies kann nicht nur zur Ableitung der Restladung geschehen, sondern auch für die Ableitung der während einer Bildaufnahme in den Sensoren gespeicherten Ladungen, also für den eigentlichen Auslesevorgang eines aufgenommenen Bildes. Die Rücksetzanordnung ist damit doppelt einsetzbar, so daß im Endeffekt für die Rücksetzanordnung verglichen mit einer Anordnung mit normaler Ausleseanordnung kaum zusätzlicher Aufwand entsteht.

Die Rücksetzanordnung kann vorteilhaft so ausgelegt sein, daß sie zunächst eine Sensor-Zeile und nachfolgend nach der vorgebbaren Anzahl von Takten jeweils eine weitere Sensor-Zeile aktiviert. Bei dieser Auslegung wird zur Zeit jeweils nur eine Sensor-Zeile neu aktiviert, so daß zu einem solchen Aktivierungszeitpunkt über die verschiedenen Ausleseleitungen auch nur die Ladung jeweils eines Sensorelementes abfließt. Diese Auslegung ist am sichersten, da bei dieser Variante auch beim Rücksetz-Vorgang in jeder Ausleseleitung nur maximal die Ladungsmenge abfließen kann, die in dem einen Sensor gespeichert werden kann.

Aus diesem Grunde kann in diesem Falle auch, wie nach einer weiteren Ausgestaltung der Erfindung vorgesehen ist, die Frequenz des Rücksetz-Taktsignals höher sein als die Wechsel-Frequenz, mit der bei einem Auslesevorgang der Sensoren die Sensor-Zeilen nacheinander aktiviert werden. Dies hat den Vorteil, daß der Rücksetz-Vorgang durch die Rücksetzanordnung in relativ kurzer Zeit vorgenommen werden kann.

Alternativ zu der Aktivierung nur jeweils einer Sensor-Zeile kann auch vorgesehen sein, daß die Rücksetzanordnung zunächst n Sensor-Zeilen und nachfolgend nach der vorgebbaren Anzahl von Takten jeweils n weitere Sensor-Zeilen aktiviert, wobei n eine natürliche ganze Zahl größer als 1 ist.

Hierbei werden also sowohl bei Beginn des Rücksetz-Vorganges als auch nachfolgend jeweils mehrere, nämlich n-Sensor-Zeilen gleichzeitig aktiviert. Zu einem solchen Aktivierungszeitpunkt fließt damit zwar eine größere Ladungsmenge ab, der Reset-Vorgang kann jedoch in kürzerer Zeit vorgenommen werden.

Für diese Auslegung ist nach einer weiteren Ausgestaltung der Erfindung vorgesehen, daß die Schieberegisteranordnung n Register aufweist, daß der der Schieberegisteranordnung eingangsseitig zugeführte Impuls jedem der n Schieberegister eingangsseitig zugeführt wird und jedes der n Schieberegister mit dem Takt des Rücksetz-Signals durchläuft und daß jede Schaltleitung der Matrix mit je einem Ausgang der Schieberegister gekoppelt ist.

Der der Schieberegisteranordnung zugeführte Impuls wird jedem der n Schieberegister eingangsseitig zugeführt und mit dem Takt des Rücksetz-Taktsignals durch diese Schieberegister geschoben. Somit werden durch jedes einzelne der Schieberegister jeweils eine Sensorzeile zur gleichen Zeit aktiviert. Dies bedeutet, daß bei n Schieberegistern auch n Sensor-Zeilen gleichzeitig aktiviert werden.

Für eine solche Anordnung mit n Schieberegistern werden zwar zu einem gegebenen Zeitpunkt mehrere Sensorzeilen gleichzeitig aktiviert; dies hat jedoch den Vorteil, daß die Frequenz des Rücksetz-Taktsignals gleich derjenigen Wechsel-Frequenz sein kann, mit der bei einem Auslesevorgang der Sensoren die Sensorzeilen nacheinander aktiviert werden, wie dies nach einer weiteren Ausgestaltung vorgesehen ist. Der Vorteil einer solchen Auslegung besteht darin, daß das Rücksetz-Taktsignal auch als Taktsignal für den Auslesevorgang in unveränderter Form eingesetzt werden kann, was eine weitere Vereinfachung der Gesamtanordnung bedeutet.

Nachfolgend werden zwei Ausführungsbeispiele der erfindungsgemäßen Anordnung anhand der Zeichnung näher erläutert. Es zeigen:
Fig. 1 eine schematische Darstellung einer Sensormatrix,
Fig. 2 ein Blockschaltbild einer ersten Ausführungsform einer Rücksetzanordnung für die Matrix gemäß Fig. 1,
Fig. 3 einige Zeitdiagramme von Signalen der Anordnung gemäß Fig. 2,
Fig. 4 eine zweite Ausführungsform einer Rücksetzanordnung für die Matrix gemäß Fig. 1 und
Fig. 5 die zeitlichen Verläufe einiger Signale der Anordnung gemäß Fig. 4.

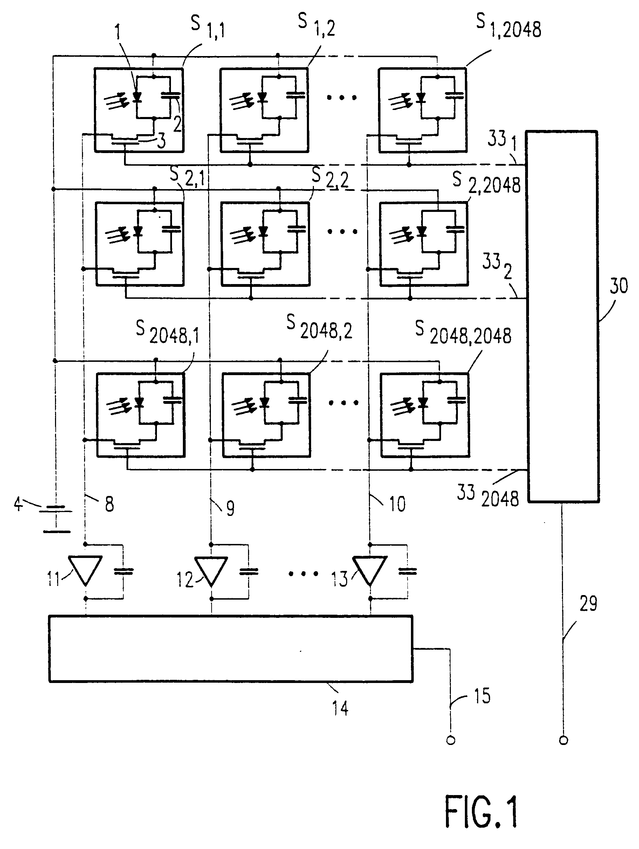

Eine in Fig. 1 schematisch dargestellte Sensormatrix weist in dem in der Fig. dargestellten Beispielsfalle 2048 x 2048 Sensoren auf, die zu jeweils gleicher Anzahl in Spalten und Zeilen angeordnet sind. In der Fig. 1 sind nur einige dieser Sensoren exemplarisch dargestellt. So sind beispielsweise in der ersten Zeile der Fig. 1 nur die Sensoren S_{1,1}, S_{1,2} und S_{1,2048} dargestellt. In der ersten Spalte sind gemäß Fig. 1 exemplarisch nur die Sensoren S_{1,1} S_{2,1} und S_{2048,1} dargestellt.

Jeder der Sensoren ist in gleicher Weise aufgebaut. Die Sensoren können bei Einsatz geeigneter Halbleiter selbst bereits, falls gewünscht, röntgenstrahlenempfindlich sein. Für Anwendungen in der Röntgendiagnostik kann aber auch eine lichtempfindliche Photodiode vorgesehen sein, welche dann Licht empfängt, wenn auf eine über ihr angeordnete Phosphorschicht Röntgenstrahlung trifft. Der Aufbau der Sensoren der Anordnung gemäß Fig. 1 wird im folgenden exemplarisch anhand des Sensors S_{1,1} erläutert.

Der Sensor weist eine Fotodiode 1 auf, welche, wie in der Fig. 1 angedeutet, bestrahlt wird. Der Fotodiode 1 ist eine Speicherkapazität 2 parallel geschaltet. Die Anode der Fotodiode 1 sowie eine Elektrode der Speicherkapazität 2 sind mit einer Gleichspannungsquelle 4 verbunden, welche diese mit einer negativen Gleichspannung vorspannt. Die Kathode der Fotodiode 1 sowie die andere Elektrode der Speicherkapazität 2 sind beide mit einem Source-Anschluß eines als elektrischer Schalter dienenden Schalt-Feldeffekttransistors 3 verbunden. Der Sensor kann beispielsweise in Dünnfilmtechnik hergestellt sein.

Bei auf die Fotodioden 1 der verschiedenen Sensorelemente auftreffender Strahlung werden die Fotodioden leitend und infolge der mittels der Gleichspannungsquelle 4 vorgenommenen Vorspannung wird auf die Speicherkapazitäten 2 der Sensoren Ladung aufgebracht, deren Größe von der Intensität der auf die jeweilige Fotodiode eines Sensors auftreffenden Strahlung abhängig ist. Die in den Kapazitäten 2 nach einer gewissen Zeit gespeicherte Ladung ist also ein Maß für die Strahlungsintensität. Diese Ladung ist über die Schalttransistoren 3 für jedes Sensorelement einzeln auslesbar.

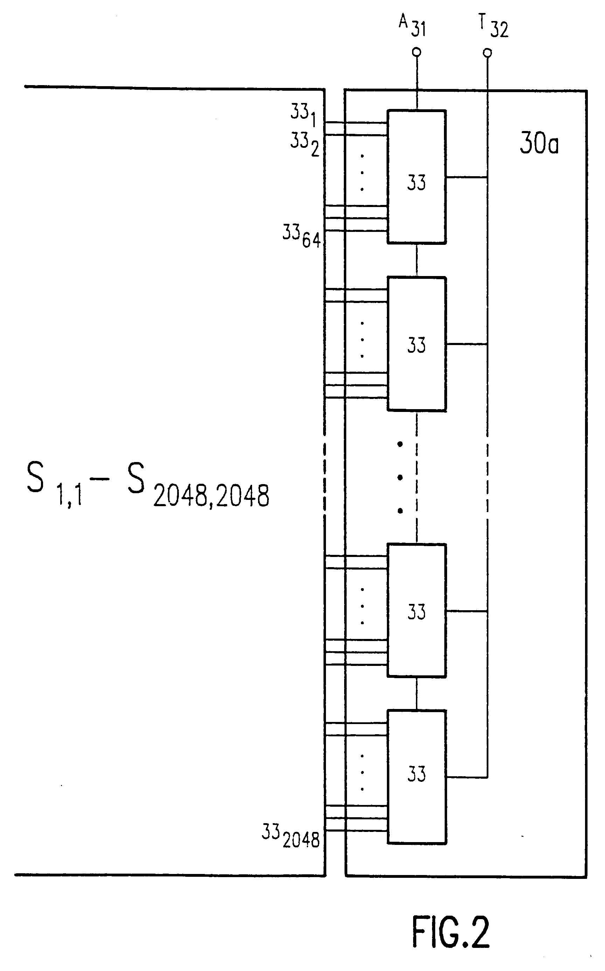

Dazu ist zunächst für jede Zeile der Sensormatrix eine Schaltleitung vorgesehen. In der Darstellung gemäß Fig. 1 sind für die erste Zeile eine eine Schaltleitung 33₁, für die zweite Zeile eine Schaltleitung 33₂ und für die 2048. Zeile eine Schaltleitung 33₂₀₄₈ angedeutet. Diese Schaltleitungen sind mit den Gate-Anschlüssen der Feldeffekttransistoren 3 der Sensoren verbunden. Eine Schaltleitung aktiviert also die Sensoren der ihr zugeordneten Sensor-Zeile. Die Aktivierung der Schaltleitungen wird mittels einer Anordnung 30 vorgenommen, welche sowohl beim Auslesevorgang der Sensoren, als auch für einen Rücksetzvorgang eingesetzt wird. Diese Anordnung wird nachfolgend anhand der Fig. 2 bis 5 näher erläutert.

Für jede Spalte der in der Fig. 1 ausschnittsweise angedeuteten Matrix ist je eine Ausleseleitung 8, 9 bzw. 10 vorgesehen. Diese Ausleseleitung sind sämtlich mit den Drain-Anschlüssen der Feldeffekttransistoren der jeweils zugeordneten Spalte verbunden.

In jeder Ausleseleitung, von der in der Fig. nur drei angedeutet sind, ist je ein Verstärker 11, 12 bzw. 13 vorgesehen. Die über die Ausleseleitung abfließenden Ladungen, die die Bildinformation repräsentieren, werden durch diese Verstärker weiter verstärkt und nachfolgend in einem Analog-Multiplexer 14 in ein serielles Signal umgesetzt, das an einem Ausgang 15 des Multiplexers zur Verfügung steht und weiterverarbeitet werden kann.

In Fig. 2 ist eine erste Ausführungsform einer Rücksetzanordnung 30a als Blockschaltbild dargestellt, wie sie als Anordnung 30 in der Fig. 1 eingesetzt werden kann. Die Anordnung 30a gemäß Fig. 2 ist dabei so ausgelegt, daß sie nicht nur als Rücksetzanordnung, sondern auch als Steueranordnung für den Auslesevorgang dienen kann.

In der Fig. 2 ist die Sensormatrix als ein Block mit der Bezeichnung S_{1, 1}, ... S_{2048, 2048} angedeutet. Diese Sensormatrix weist 2048 Schaltleitungen auf, über die die 2048 Zeilen der Matrix einzeln aktiviert werden können. Von diesen Schaltleitungen sind in der Fig. 2 nur einige exemplarisch dargestellt. Die Schaltleitungen tragen die Bezeichnungen 33₁, 33₂, ... 33₂₀₄₈.

Die Rücksetzanordnung 30a gemäß Fig. 2 ist so ausgelegt, daß durch sie nur jeweils eine Sensor-Zeile neu aktiviert wird. Dazu weist die Anordnung Schieberegister 33 auf, welche hintereinandergeschaltet sind und welche jeweils 64 Ausgänge aufweisen. Da insgesamt 2048 Sensor-Zeilen vorgesehen sind, sind 16 Schieberegister 33 hintereinandergeschaltet.

Der Schieberegisterkette mit den Schieberegistern 33 kann eingangsseitig ein in der Fig. mit A₃₁ bezeichnetes Impuls-Signal zugeführt werden. Dieses Signal liefert einen für einen durch die Rücksetzanordnung vorzunehmenden Rücksetzvorgang vorgesehenen Impuls, welcher durch die Schieberegisterkette 33 hindurchgeschoben wird und nacheinander an deren Ausgängen erscheint, so daß die Schaltleitungen 33₁ bis 33₂₀₄₈ nacheinander für die Dauer des Impulses aktiviert werden. Für den Schiebevorgang wird ein Schalt-Taktsignal benötigt, welches jedem der Schieberegister 33 zugeführt ist und welches in der Fig. mit T₃₂ bezeichnet ist.

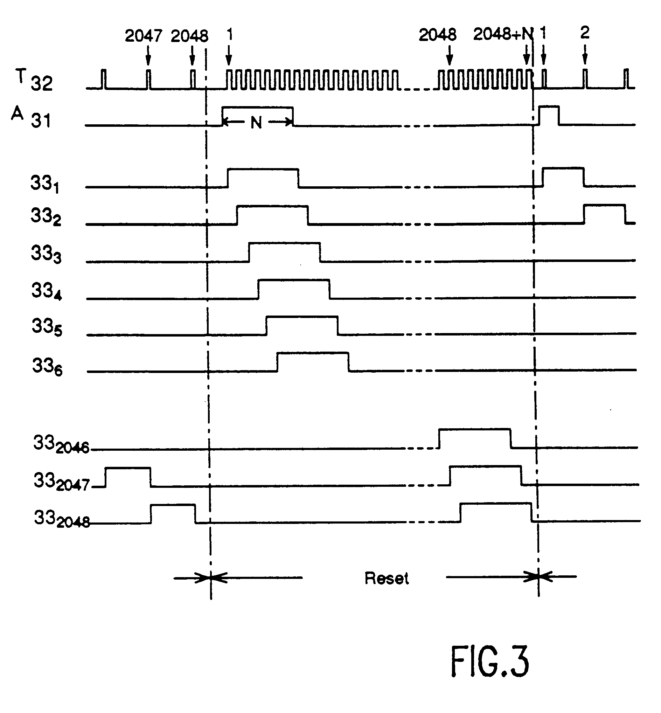

Die Arbeitsweise der Schaltung gemäß Fig. 2 wird im folgenden anhand der Fig. 3 näher erläutert:
Die in Fig. 2 dargestellte Rücksetzanordnung 31a wird nicht nur als Rücksetzanordnung sondern auch als Steueranordnung für den Auslesevorgang der Sensormatrix eingesetzt. Dazu wird gemäß der Darstellung in Fig. 3 das Taktsignal T₃₂ in einem ersten in Fig. 3 dargestellten zeitlichen Abschnitt als Auslese-Taktsignal eingesetzt. In der Fig. 3 ist dieser durch das Taktsignal T₃₂ und die Registerkette mit den Registern 33 gesteuerte Auslesevorgang für die Sensor-Zeilen 2047 und 2048 exemplarisch dargestellt. Am Ende eines solchen Auslesevorganges werden nämlich diese beiden Zeilen ausgelesen, selbstverständlich nachdem zuvor die Zeilen 1 bis 2046 nacheinander ausgelesen wurden.

In einem zweiten in der Fig. 3 dargestellten Zeitabschnitt wird die Frequenz des Taktsignals T₃₂ erhöht. Der Registerkette mit den Registern 33 wird eingangseitig ein Impuls des Signals A₃₁ zugeführt, welcher durch die Registerkette hindurchgeschoben wird und nacheinander an deren Ausgängen auftritt. In der Darstellung gemäß Fig. 3 wird dieser Impuls der Breite N zunächst an dem ersten Ausgang des ersten Registers 33 auftreten, es wird also die Schaltleitung 33₁ der ersten Zeile aktiviert. Nachfolgend wird mit dem nächsten Takt von T₃₂ die zweite Sensor-Zeile 33₂ aktiviert. Dies setzt sich für die nachfolgenden Zeilen, von denen in der Fig. 3 nur einige angedeutet sind, fort bis schließlich die letzte Schaltleitung 33₂₀₄₈ der Sensor-Zeile 2048 aktiviert wurde. Jeder dieser Aktivierungsvorgänge wird jedoch nur entsprechend der Impulsbreite N des Impulses des Signals A₃₁ vorgenommen, d.h. jede Schaltleitung wird nur solange aktiviert, wie der Impuls des Signals A₃₁ dies vorgibt. In dieser Ausführungsform der Rücksetzanordnung wird jeweils nur eine Sensor-Zeile neu aktiviert, was einerseits zur Folge hat, daß über die Ausleseleitungen der Anordnung gemäß Fig. 1 nur maximal die in einem Sensorelement speicherbare Ladungsmenge abfließt, so daß nachgeschaltete Verstärker nicht überlastet werden können. Um die Dauer des Rücksetzvorganges möglichst gering zu halten, wird während dieses Vorganges das Signal T_{32N} als Rücksetz-Taktsignal mit erhöhter Frequenz zugeführt.

In der Fig. 3 ist nach dem zweiten Zeitabschnitt, in dem der oben beschriebene Rücksetzvorgang vorgenommen wird, noch der Beginn eines nachfolgenden Auslesevorganges angedeutet, in dem das Taktsignal T₃₂ wieder mit geringerer Frequenz vorliegt. Es wird ein durch das Signal A₃₁ gelieferter Impuls wiederum durch die Registerkette mit den Registern 33 geschoben, so daß die Zeilen 1 bis 2048 nacheinander aktiviert werden, wobei jedoch eine neue Zeile immer erst dann wieder aktiviert wird, wenn die zuvor aktivierte bereits deaktiviert wurde. Dies ist für den Auslesevorgang der Bildinformation aus den Sensoren erforderlich, da die in den einzelnen Sensor-Zeilen gespeicherten Ladungen selbstverständlich getrennt weiterverarbeitet werden müssen, um die Ladungen den einzelnen Sensoren örtlich zuordnen zu können.

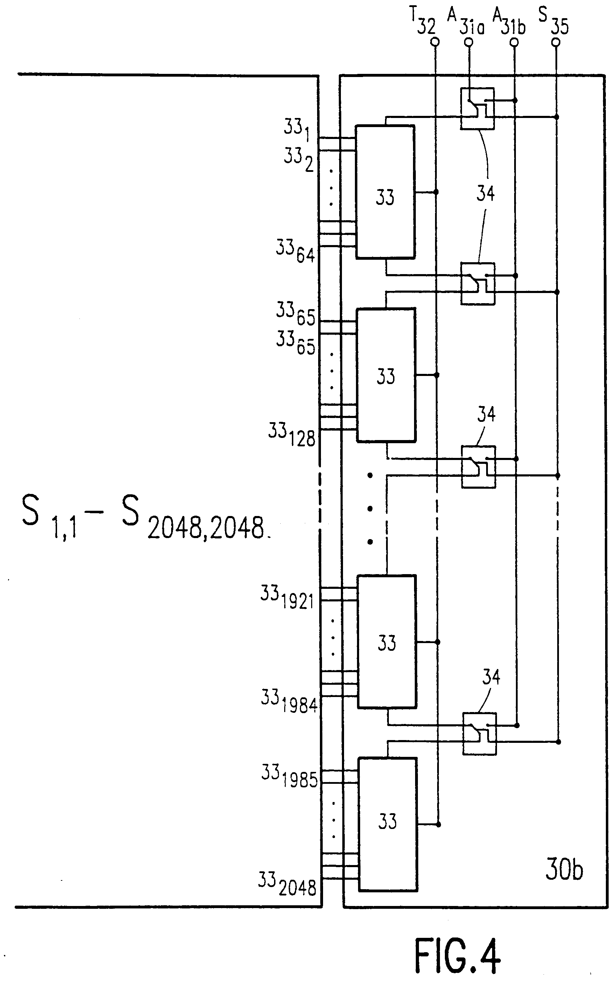

In Fig. 4 ist eine zweite Ausführungsform einer Rücksetzanordnung 30b dargestellt, wie sie als Anordnung 30 für die Matrix gemäß Fig. 1 eingesetzt werden kann. Bei dieser zweiten Ausführungsform wird für den Rücksetzvorgang nicht nur eine, sondern jeweils 16 Sensor-Zeilen gleichzeitig neu aktiviert.

Die Anordnung 30b gemäß Fig. 4 weist wiederum 16 Schieberegister 33 auf, welchen das Taktsignal T₃₂ zugeführt wird. Es sind ferner Schalter 34 vorgesehen, welche mittels eines Schaltsignals S₃₅ angesteuert werden. Diese Schalter 34 sind nun so steuerbar, daß in einer ersten Schaltposition die Schieberegister 33 hintereinandergeschaltet sind und daß im ersten dieser Schieberegister eingangsseitig ein Impulssignal A₃₁ₐ zugeführt wird. In einer zweiten Schaltposition der Schalter 34 sind die Register nicht mehr hintereinandergeschaltet, sondern es wird jedem der Schieberegister 33 eingangsseitig ein Schaltsignal A_{31b} zugeführt. Die erste Schaltposition, in der die Schieberegister 33 hintereinandergeschaltet sind, ist für den Auslesevorgang vorgesehen, während die zweite Schaltpositon für den Rücksetzvorgang vorgesehen ist.

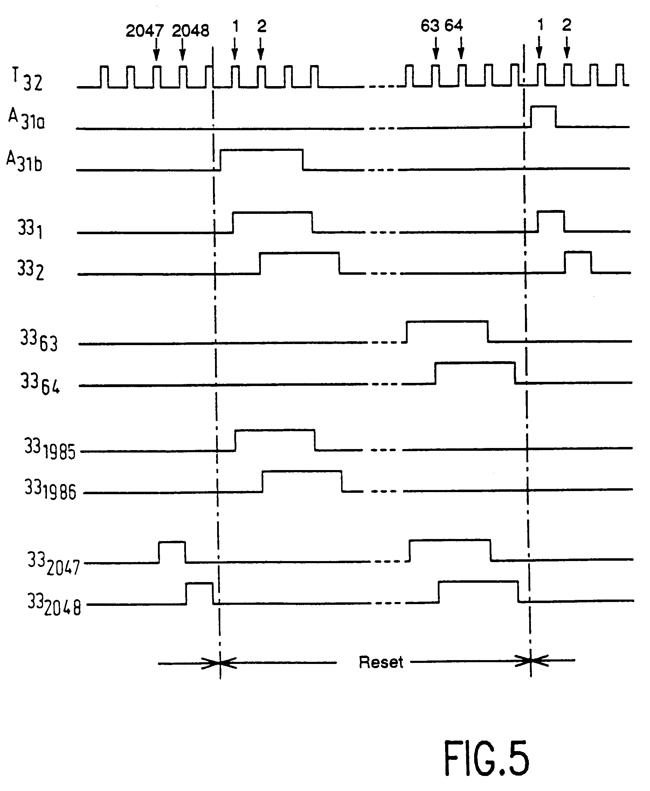

Dies wird nachfolgend anhand der Fig. 5 und einiger in ihr dargestellter zeitlicher Signalverläufe der Anordnung gemäß Fig. 1 näher erläutert. In Fig. 5 ist das Taktsignal T₃₂ dargestellt, welches sowohl als Rücksetz-Taktsignal eingesetzt wird, als auch als Auslesetaktsignal während des Auslesevorganges. Wie die Fig. 5 zeigt, weist dieses Signal T₃₂ sowohl als Rücksetz-Taktsignal wie auch als Auslese-Taktsignal die gleiche Frequenz auf, wird also in unveränderter Form sowohl für den Auslese- wie auch für den Rücksetzvorgang eingesetzt.

In Fig. 5 ist wiederum in einem ersten Abschnitt der Auslesevorgang für die Sensor-Zeilen 2047 und 2048 angedeutet, mit welchen ein Auslesezyklus beendet wird. Während eines solchen Auslesezyklus sind die Schalter 34 der Anordnung gemäß Fig. 4 in ihrer ersten Schaltposition, so daß die Schieberegister 33 hintereinandergeschaltet sind. Für den zweiten Zeitabschnitt der Darstellung gemäß Fig. 5 werden die Schalter 34 mittels des Schaltsignals 35 in ihre zweite Position geschaltet, so daß jedem der Schieberegister 33 eingangsseitig ein Impuls des Signals A_{31b}, welcher in der Fig. 5 im zweiten Zeitabschnitt angedeutet ist, zugeführt wird. Dies hat zur Folge, daß dieser Impuls mit dem nächsten Takt des Signals T₃₂ an jeweils einem Ausgang jedes der 16 Schieberegister 33 auftaucht. In der Darstellung gemäß Fig. 5 ist dieses exemplarisch für die Schaltleitungen 33₁ und 33₁₉₈₅ dargestellt. Mit dem nächsten Takt des Signals T₃₂ tritt dieser Impuls wiederum an jeweils einem Ausgang jedes der 16 Schieberegister 33 auf, was in der Darstellung gemäß Fig. 5 exemplarisch für die den Schaltleitungen 33₂ bzw. 33₁₉₈₆ dargestellten Ausgänge der Schieberegister dargestellt ist. Dieser Vorgang setzt sich fort, bis die letzten Ausgänge der Schieberegister aktiviert werden, in der Darstellung gemäß Fig. 5 sind dies im vorletzten Zyklus die Schaltleitungen 33₆₃ und schließlich die Schaltleitungen 33₆₄ und 33₂₀₄₈.

Auch für diese Ausführungsform gilt, daß jede einzelne Schaltleitung bzw. jeder einzelne Ausgang der Schieberegister 33 nur entsprechend einer vorgegebenen Anzahl von Takten des Taktsignals T₃₂ aktiviert bleibt, wobei diese Dauer von der Breite des Impulses des Signals A_{31b} abhängt.

Nachdem der Rücksetzvorgang durch Aktivieren der Schaltleitungen 33₆₄, 33₁₀₂₈ usw. bis 33₂₀₄₈ beendet wurde, wird nachfolgend wieder ein Auslesevorgang erfolgen, welcher ebenfalls durch die Anordnung 30b der Fig. 4 vorgenommen wird. Dazu werden nun über das Schaltsignal S₃₅ die Schalter 34 wieder in ihre erste Position geschaltet, so daß die Schieberegister 33 wieder hintereinander in Reihe geschaltet sind. Ein nunmehr in dem Signal A₃₁ₐ auftauchender Impuls wird nacheinander durch die Schieberegister 33 hindurchgeschoben, wobei der Impuls bezüglich seiner Breite so ausgelegt ist, daß eine neue Zeile nur dann aktiviert wird, wenn die zuvor aktivierte Zeile wieder deaktiviert wurde.

Sowohl für die Anordnung gemäß Fig. 2 wie auch für diejenige gemäß Fig. 4 gilt gemeinsam, daß die Breite der Impulse des Signals A₃₁ bzw. A_{31b} so ausgelegt ist, daß eine hinreichende Menge der nach dem zuvor erfolgten Auslesevorgang in den Sensoren nachfolgend noch gespeicherten Ladungen während des Rücksetzvorganges ausgelesen wird. Dazu kann der Impuls beispielsweise so ausgelegt sein, daß etwa 99 % der Restladung aus den Sensoren über die Ausleseleitungen abfließt. Die zeitliche Dauer des Rücksetzvorganges ist dabei noch so gering, daß die Aufnahme schneller Bilderfolgen nicht zu sehr behindert wird.

## Patentansprüche

1. Anordnung mit in einer Matrix in Zeilen und Spalten angeordneten licht- oder röntgenstrahlenempfindlichen Sensoren (S_{1, 1}, ..., S_{2048, 2048}), die in Abhängigkeit der auftreffenden Strahlungsmenge Ladungen erzeugen und die jeweils einen elektrischen Schalter (3) aufweisen, mit je Sensoren-Zeile einer Schaltleitung (33₁, ... , 33₂₀₄₈), über die die Schalter (3) aktivierbar sind, so daß die Ladungen der Sensoren der jeweils aktivierten Sensorzeile gleichzeitig über zugeordnete Ausleseleitungen (8, 9, ..., 10) abfließen,
dadurch gekennzeichnet, daß zur Ableitung der Restladungen zuvor ausgelesener Sensor-Zeilen eine Rücksetzanordnung (30a, 30b) vorgesehen ist, welche wenigstens eine der ausgelesenen Sensor-Zeilen aktiviert, welche jedesmal nach einer vorgebbaren Anzahl von Takten eines Rücksetz-Taktsignals (T₃₂) jeweils wenigstens eine weitere der ausgelesenen Sensor-Zeilen aktiviert und welche jede aktivierte Sensor-Zeile nach einer vorgebbaren Anzahl von Takten nach deren Aktivierung wieder deaktiviert.

2. Anordnung nach Anspruch 1,
dadurch gekennzeichnet, daß die Rücksetzanordnung (30a, 30b) eine Schieberegisteranordnung aufweist, daß jede Schaltleitung (33₁, 33₂₀₄₈) der Matrix mit je einem Ausgang der Schieberegisteranordnung gekoppelt ist und daß der Schieberegisteranordnung eingangsseitig ein Impuls (A₃₁, A_{31b}) einer vorgebbaren Dauer Zugeführt wird, welcher mit dem Takt des Rücksetz-Taktsignals (T₃₂) die Schieberegisteranordnung durchläuft und zeitlich verschoben an deren Ausgängen erscheint.

3. Anordnung nach Anspruch 1 oder 2,
dadurch gekennzeichnet, daß allen Sensoren (S_{1, 1}, ..., S_{2048, 2048}) jeweils einer Spalte der Matrix eine gemeinsame Ausleseleitung (33₁, ... , 33₂₀₄₈) zugeordnet ist und daß die Rücksetzanordnung (30a, 30b) die Ableitung der Restladungen für alle Sensor-Zeilen vornimmt.

4. Anordnung nach einem der Ansprüche 1 bis 3,
dadurch gekennzeichnet, daß die Rücksetzanordnung zunächst eine Sensor-Zeile und nachfolgend nach der vorgebbaren Anzahl von Takten jeweils eine weitere Sensor-Zeile aktiviert.

5. Anordnung nach Anspruch 4,
dadurch gekennnzeichnet, daß die Frequenz des Rücksetz-Taktsignals (T₃₂) höher ist als die Wechselfrequenz, mit der bei einem Auslesevorgang der Sensoren die Sensor-Zeilen nacheinander aktiviert werden.

6. Anordnung nach einem der Ansprüche 1 bis 3,
dadurch gekennzeichnet, daß die Rücksetzanordnung zunächst n Sensor-Zeilen und nachfolgend nach der vorgebbaren Anzahl von Takten jeweils n weitere Sensor-Zeilen aktiviert, wobei n eine natürliche ganze Zahl größer als 1 ist.

7. Anordnung nach Anspruch 2 und Anspruch 6,
dadurch gekennzeichnet, daß die Schieberegisteranordnung n Register (33) aufweist, daß der der Schieberegisteranordnung eingangsseitig zugeführte Impuls jedem der n Schieberegister (33) eingangsseitig zugeführt wird und jedes der n Schieberegister (33) mit dem Takt des Rücksetz-Signals (T₃₂) durchläuft und daß jede Schaltleitungen (33₁, ..., 33₂₀₄₈) der Matrix mit je einem Ausgang der Schieberegister (33) gekoppelt ist.

8. Anordnung nach einem der Ansprüche 1 bis 7,
dadurch gekennzeichnet, daß die Rücksetzanordnung (30a, 30b) auch zum Auslesen der Ladungen der Sensoren dient.

9. Anordnung nach Anspruch 7,
dadurch gekennzeichnet, daß die Frequenz des Rücksetz-Taktsignals (T₃₁) gleich der Wechselfrequenz ist, mit der bei einem Auslesevorgang der Sensoren die Sensor-Zeilen nacheinander aktiviert werden.

10. Verwendung der Anordnung nach einem der Ansprüche 1 bis 9 in einem Röntgen-Untersuchungsgerät.

## Claims

1. An arrangement comprising light-sensitive or X-ray sensitive sensors (S_{1,1}, ..., S_{2048,2048}) which are arranged in a matrix in rows and columns and produce charges in dependence upon the amount of incident radiation, each sensor having an electrical switch (3), for each sensor row there being provided a switching line (33₁, ..., 33₂₀₄₈) *via* which the switches (3) can be activated so that the charges of the sensors of the activated sensor row are drained simultaneously *via* associated read lines (8, 9, ..., 10), characterised in that for draining the residual charges from previously read sensor rows there is provided a reset device (30a, 30b) which activates at least one of the read-out sensor rows, which each time after a presettable number of clock pulses of a reset clock signal (T₃₂) at least one a further sensor row of the read-out sensor rows, and which deactivates each activated sensor row again a presettable number of clock pulses after its activation.

2. An arrangement as claimed in Claim 1, characterised in that the reset device (30a, 30b) comprises a shift-register device, each switching line (33₁, 33₂₀₄₈) of the matrix being coupled to a respective output of the shift-register device and a pulse (A₃₁, A_{31b}) of presettable duration being applied to the input side of the shift-register device, which pulse traverses the shift-register device in the clock rhythm of the reset clock signal (T₃₂) and appears on the outputs thereof shifted in time.

3. An arrangement as claimed in Claim 1 or 2, characterised in that all the sensors (S_{1,1}, ..., S_{2048,2048}) of each column of the matrix have an associated common read line (33₁, ..., 33₂₀₄₈), and the reset device (30a, 30b) drains the residual charges for all the sensor rows.

4. An arrangement as claimed in any one of the Claims 1 to 3, characterised in that the reset device first activates one sensor row and subsequently, after the presettable number of clock pulses, each time one further sensor row.

5. An arrangement as claimed in Claim 4, characterised in that the frequency of the reset clock signal (T₃₂) is higher than the cycling frequency with which the sensor rows are successively activated during a read cycle of the sensors.

6. An arrangement as claimed in any one of the Claims 1 to 3, characterised in that the reset device first activates n sensor rows and subsequently, after the presettable number of clock pulses, each time n further sensor rows, n being an integer larger than 1.

7. An arrangement as claimed in Claim 2 and Claim 6, characterised in that the shift-register device comprises n registers (33), the pulse applied to the input side of the shift-register device being applied to the input side of each of the n shift registers (33) and traversing each of the n shift registers (33) in the clock rhythm of the reset signal (T₃₂), and each of the switching lines (33₁, ..., 33₂₀₄₈) of the matrix being coupled to a respective output of the shift registers (33).

8. An arrangement as claimed in any one of the Claims 1 to 7, characterised in that the reset device (30a, 30b) also serves for reading out the charges from the sensors.

9. An arrangement as claimed in Claim 7, characterised in that the frequency of the reset clock signal (T₃₁) is equal to the cycling frequency with which the sensor rows are successively activated during a read cycle of the sensors.

10. The use of the arrangement as claimed in any one of the Claims 1 to 9 in an X-ray examination apparatus.

## Revendications

1. Agencement comportant des détecteurs (S_{1, 1,}, ..., S_{2048,2048}) sensibles à la lumière ou aux rayons X disposés selon une matrice de rangées et de colonnes, qui produisent des charges en fonction de la quantité de rayonnement appliquée et qui présentent chacun un commutateur électrique (3), avec, pour chaque rangée de détecteurs, une ligne de commutation (33₁, ..., 33₂₀₄₈) par laquelle les commutateurs (3) peuvent être activés, de telle sorte que les charges des détecteurs de la rangée de détecteurs respectivement activée s'écoulent simultanément via des lignes de lecture (8, 9, ..., 10) associées, caractérisé en ce que, pour extraire les charges résiduelles de rangées de détecteurs lues précédemment, il est prévu un dispositif de remise à zéro (30a, 30b) qui active au moins une des rangées de détecteurs lues, qui active, après un nombre prédéterminable d'impulsions de cadence d'un signal de cadence de remise à zéro (T₃₂), respectivement, au moins une autre des rangées de détecteurs lues et qui désactive chaque rangée de détecteurs activée un nombre prédéterminable d'impulsions de cadence après leur activation.

2. Agencement selon la revendication 1, caractérisé en ce que le dispositif de remise à zéro (30a, 30b) présente un montage de registres à décalage, en ce que chaque ligne de commutation (33₁, 33₂₀₄₈) de la matrice soit couplée respectivement à une sortie du circuit de registres à décalage et que soit acheminée au montage de registres à décalage, côté entrée, une impulsion (A₃₁, A_{31b}) d'une durée prédéterminable, qui traverse le montage de registres à décalage à la cadence du signal de cadence de remise à zéro (T₃₂) et apparaît décalée dans le temps à ses sorties.

3. Agencement selon la revendication 1 ou 2, caractérisé en ce qu'une ligne de lecture commune (33₁, ..., 33₂₀₄₈) est affectée à tous les détecteurs (S_{1, 1}, ..., S_{2048,2048}), respectivement, d'une colonne de la matrice et en ce que le dispositif de remise à zéro (30a, 30b) assure l'extraction des charges résiduelles pour toutes les rangées de détecteurs.

4. Agencement selon l'une quelconque des revendications 1 à 3, caractérisé en ce que le dispositif de remise à zéro active tout d'abord une rangée de détecteurs et ensuite, après le nombre prédéterminable d'impulsions de cadence, respectivement, une autre rangée de détecteurs.

5. Agencement selon la revendication 4, caractérisé en ce que la fréquence du signal de cadence de remise à zéro est plus élevée que la fréquence d'alternance à laquelle, lors d'une opération de lecture des détecteurs, les rangées de détecteurs sont activées successivement.

6. Agencement selon l'une quelconque des revendications 1 à 3, caractérisé en ce que le dispositif de remise à zéro active tout d'abord n rangées de détecteurs et, ensuite, après le nombre prédéterminable d'impulsions de cadence, de même, respectivement, n autres rangées de détecteurs, n étant un nombre entier naturel supérieur à 1.

7. Agencement selon la revendication 2 et la revendication 6, caractérisé en ce que le montage de registres à décalage comporte n registres (33), en ce que l'impulsion acheminée, côté entrée, au montage de registres à décalage est acheminée coté entrée à chacun des n registres à décalage (33) et traverse chacun des registres à décalage (33) à la cadence du signal de remise à zéro (T₃₂) et en ce que chaque ligne de commutation (33₁, ..., 33₂₀₄₈) de la matrice est couplée respectivement à une sortie des registres à décalage (33).

8. Agencement selon l'une quelconque des revendications 1 à 7, caractérisé en ce que le dispositif de remise à zéro (30a, 30b) sert également à la lecture des charges des détecteurs.

9. Agencement selon la revendication 7, caractérisé en ce que la fréquence du signal de cadence de remise à zéro est égale à la fréquence d'alternance à laquelle, lors d'une opération de lecture des détecteurs, les rangées de détecteurs sont activées successivement.

10. Utilisation de l'agencement selon l'une quelconque des revendications 1 à 9 dans un appareil d'examen radiographique.
